# EUROPEAN PATENT SPECIFICATION

(11) **EP 0 749 539 B1**
(45) Date of publication and mention of the grant of the patent: **22.05.2002**
(21) Application number: 95913597.1
(22) Date of filing: 07.03.1995
(51) Int. Cl.: F16F 9/46, F16F 9/32

(54) **SHOCK ABSORBER HAVING EXTERNALLY ADJUSTABLE COMPRESSION**
STOSSDÄMPFER MIT AUSWENDIG EINSTELBARER KOMPRESSION
AMORTISSEUR A COMPRESSION REGLABLE DE L'EXTERIEUR

(30) Priority: 11.03.1994 US 212010; 18.03.1994 US 210586
(43) Date of publication of application: 27.12.1996
(73) Proprietor: GABRIEL RIDE CONTROL PRODUCTS, INC., Brentwood, TN 37027 (US); POLARIS INDUSTRIES L.P., Roseau, MN 56751 (US)
(72) Inventor: BELL, Stephen, H., Guelph, Ontario N1H 7M5 (CA)
(74) Representative: Hitchcock, Esmond Antony
(86) International application number: US9502870
(87) International publication number: WO9524572

(56) References cited:
- DE-C- 741 272
- FR-A- 1 076 192
- GB-A- 778 281
- US-A- 2 409 349
- US-A- 4 595 179
- US-A- 4 846 317
- US-A- 5 234 084

## Description

The present invention relates to hydraulic shock absorbers, and more particularly, to a shock absorber of the double-acting tubular type having an improved mechanism for adjusting the compression forces in the shock absorber. The shock absorber is especially useful on vehicles such as snowmobiles.

Double-acting shock absorbers utilized on vehicles usually comprise an inner or working cylinder attached, at one end and through an end cap, to the unsprung mass of the vehicle; and a piston that is movable within the inner cylinder, that has a piston rod extending out of the other end, the rod end, of the inner cylinder, and that is connected with the sprung mass of the vehicle, via the piston rod, so that when the vehicle passes over an uneven surface, the piston and inner cylinder move relative to one another. The inner cylinder contains suitable hydraulic damping fluid that may be transferred across the piston by means of valving in the piston. During the so called compression stroke of the shock absorber, that is, when the axle and frame move toward one another, a relatively small amount of the fluid is expelled from the one end of the cylinder into a reservoir which is, conventionally, an annular space defined between the inner cylinder and a surrounding outer cylinder.

The flow of fluid expelled from the cylinder during a compression stroke is typically controlled by a compression valve positioned in the compression head assembly of the 'shock absorber. The compression valve is normally spring biased to a closed position. During the compression stroke, fluid pressure increases in the cylinder. When the fluid pressure reaches a predetermined level, the pressure overcomes the spring load or bias on the compression spring, causing the compression valve to open and allowing fluid to flow from the inner cylinder into the reservoir.

It is known in the art that the compression forces of the shock absorber are dependent upon the load or tension on the compression valve spring. By adjusting the tension on the compression valve spring, it is possible to adjust the compression forces of the shock absorber and thereby adjust the ride or feel according to snow or road conditions so as to achieve user satisfaction.

GB-A-778281 discloses a shock absorber in which the shock damping action is adjustable. The flow of fluid between a compression chamber and a reservoir is resisted by a sleeve which engages one end of a spring. The other end of the spring bears against the flange of an elongate stem. The distal end of the stem contacts a line of balls held in a channel which in turn engage a screw. Rotation of the screw moves the flange, thereby adjusting the spring bias and the damping action of the shock absorber.

The present invention seeks to provide an improved shock absorber in which the compression forces may be easily adjusted, i.e. increased or decreased, so that the person riding the vehicle, e.g. a snowmobile, may readily select a desired ride or feel, i.e., harder or softer ride or feel.

The present invention also aims to provide an improved shock absorber of the type described having a compression force adjusting mechanism which does not require a particular orientation of the inner cylinder, and its compression head assembly, to the outer cylinder and endcap, thereby facilitating the manufacturing assembly of the shock absorber.

Furthermore, the present invention seeks to provide an improved shock absorber of the type described having a compression force adjusting mechanism which uses components that can be mass produced and are economical to manufacture and assemble.

In particular, the present invention is directed at a shock absorber comprising: an inner tubular member that defines a cylindrical chamber having a central longitudinal axis; an outer tubular member that is coaxial with the inner tubular member; a piston that is slidably mounted within the cylindrical chamber parallel to the central longitudinal axis of the cylindrical chamber, a piston rod that extends from one side of the piston outwardly from one end of the tubular members and that has a longitudinal axis which is coaxial with the axis of the cylindrical chamber; means on the one end of said tubular member for closing the one end of said tubular member and for slidably sealingly engaging the piston rod; a hydraulic fluid filled rebound chamber and a hydraulic fluid filled compression chamber, defined within said cylindrical chamber on the piston rod side of the piston and on the opposite side of the piston, respectively; a hydraulic fluid reservoir; means for permitting the flow of hydraulic fluid between the reservoir and the compression chamber and between compression and rebound chambers to accommodate the flow of hydraulic fluid resulting from piston and piston rod displacement within the inner tubular member;
a compression head subassembly comprising: a replenishing valve and a centrally disposed, spring biased compression valve, which valves are in fluid communication with the reservoir and the compression chamber; a first counterbore having a first end, a second end, and a central longitudinal axis generally parallel to the central longitudinal axis of the cylindrical chamber, with the first end of the first counterbore being adjacent to the compression valve, and with the second end of the first counterbore being open to the exterior of the compression head sub-assembly; a movable spring seat that is disposed in the first counterbore, that is adapted to be moved, in the first counterbore and parallel to the central longitudinal axis of the first counterbore, toward and away from the first end of the first counterbore, and that includes a member which, in part, protrudes out of the second end of the first counterbore; a coil compression spring disposed within the first counterbore, with one end of the spring being connected with the compression valve and with the other end of the spring being connected with the spring seat;
an end cap subassembly comprising: a second counterbore having a first end and a second end, with the first end of the second counterbore being open to the exterior of the end cap subassembly; and a threaded screw having a first end and a second end, with the screw being threadingly received within the second counterbore, with the first end of the screw having a head thereon and being adjacent to the first end of the second counterbore, such that selective rotation of the screw, relative to the second counterbore, such that selectiverotation of the screw, relative to the second counterbore, will move the spring seat selectively toward or away from the one end of the first counterbore. According to the characterizing features of the invention the reservoir is defined by the inner tubular member and the outer tubular member, the compression head subassembly is adapted to be brought to and assembled onto the other end of the inner tubular member as a compeltely self-contained subassembly, and includes means for limiting the movement of the spring seat toward the first end of the first counterbore, and means for limiting the movement of the spring seat away from the first end of the first counterbore and for preventing removal of the spring and spring seat from the second end of the first counterbore, the end cap subassembly is adapted to be brought to and assembled onto the other end of the outer tubular member as a completely self-contained subassembly after the compression head assembly has been assembled onto the other end of the inner tubular member, and the second end of the screw has means adapted to protrude out of the second end of the second counterbore for engaging the protruding member of the spring seat, a portion of the end cap assembly having a configuration substantially matching the configuration of a portion of the compression head subassembly so that when the end cap subassembly is brought to and assembled onto the other end of the outer tubular member, said portions of the compression head and end cap subassemblies are in substantial surface-to-surface contact, the second ends of the first and second counterbores are adjacent to each other such that the second end of the screw is adapted to engage the protruding member of the spring seat.

An embodiment of the invention will now be described by way of example and with reference to the accompanying drawings, wherein:
FIGURE 1 is a cross-sectional view of a shock absorber embodying the principles of the present invention.
FIGURE 2 is a cross-sectional view of the compression head assembly and endcap of the shock absorber of FIG. 1, shoving the improved adjusting mechanism in the firm setting position.
FIGURE 3 is a cross-sectional view of the compression head assembly and endcap of the shock absorber of FIG. 1, shoving the improved adjusting mechanism. in the soft setting position.

In the following Description of the Preferred Embodiment, the terms "upper", "lower", "upwardly", "downwardly" and the like will be used. It should be understood that these terms have reference to the embodiment as shown in the drawings.

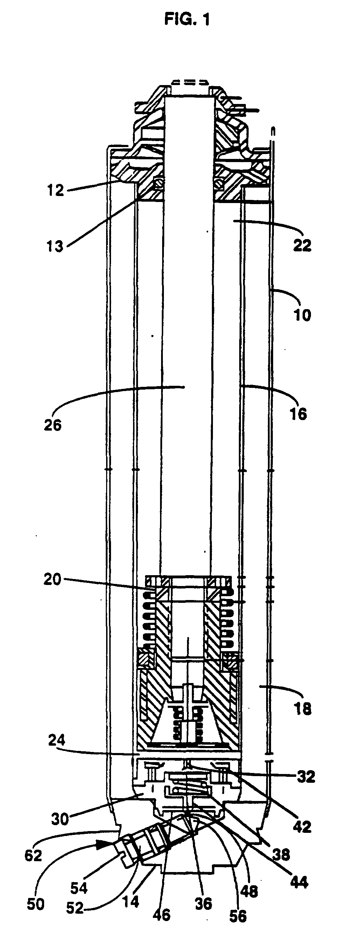

Referring to FIGURE 1, there is shown a double-acting hydraulic shock absorber comprising a substantially cylindrical outer cylinder or casing 10. The upper or rod end of the cylinder 10 receives and is closed by a closure assembly 12. The lower end of the cylinder 10 receives and is closed by an endcap 14.

The shock absorber includes an inner or working cylinder 16 that defines a cylindrical chambar and within which a piston 20 (which may be a piston assembly) is slidably mounted. The piston 20 divides the cylindrical chamber into an upper rebound or recoil chamber 22 and a lower compression chamber 24.

A piston rod 26 is connected with the piston 20 and extends out of the upper or rod end of the shock absorber through the assembly 12. A conventional seal 13 is carried by the assembly 12 and seals the piston rod 26 as it slidingly passes through the assembly 12.

The upper end of the rod 26 (not shown) is connected, in a conventional manner, to the sprung mass of a vehicle. The endcap 14 is also provided with an eyering (not shown) on its outer, exterior or lower surface for connecting the lower end of the shock absorber with the unsprung mass of the vehicle, as is well known in the art.

It will be understood that the rebound and compression chambers are filled with hydraulic fluid in a conventional manner. The inner cylinder 16 is disposed within the outer casing 10 in a spaced concentric relationship therewith so that the annular space defined by the casing 10, the cylinder 16, the closure assembly 12, and the endcap 14 constitutes a generally annular reservoir 18 for the hydraulic fluid in the shock absorber.

The piston 20, its associated piston rod 26, and the closure assembly 12 may be identical in structure and function to those described in commonly assigned U.S. Patent No. 5,234,084.

As noted, the lower end of the inner cylinder 16 is connected with a compression head assembly 30 and, the lower end of the assembly 30 is connected with the endcap 14. The compression head assembly 30 includes a port 32 of fixed diameter, and a compression valve seat 34 which surrounds the port 32. A compression or blow off valve 36 is normally held closed against the compression valve seat 34 by a coil compression spring 38. This compression spring is seated on a lower, spring seat 44 that is slidably mounted within a lower facing counterbore in the compression head assembly 30. A retaining plate 46, which includes a central aperture, limits the downward travel of the spring seat 44 and functions to hold the compression valve 36, the compression spring 38 and the spring seat 44 in the compression head assembly 30. The spring seat 44 has a lower depending, centrally disposed member 48 that is slidably received within the aperture in the plate 46 and projects below the plate 46.

During a compression stroke, pressure from the hydraulic fluid acts on the compression valve 36 causing it to unseat from the valve seat 34. Fluid then flows through the port 32 from the compression chamber 24 and into the reservoir 18.

A replenishing valve 42 floats in the top portion of the compression head assembly 38. It allows hydraulic fluid to be replenished to the inner cylinder 16 during the rebound or recoil stroke of the shock absorber.

A compression adjustment mechanism, generally indicated at 50, is provided to adjust the preload or tension of the compression spring 30, and thereby to adjust the compression forces of the shock absorber. The compression adjustment mechanism 50 comprises a screw 52 which is threadingly screwed into a bore 53 in the endcap 14. The central axis of the bore 53 is at an acute angle, e.g. 65°, with respect to a central longitudinal axis of the shock absorber. The screw 52 has outer screw threads which mate with screw threads within the bore 53 as the screw 52 is screwed into the bore. The screw 52 has a slotted head 54, at its outward end. The slotted head 54 is adapted to receive a screw driver or similar tool for rotating the screw about its central axis and thereby advancing or retracting the screw into or out of the threaded bore 53. The screw 52 also has a cone-shaped, cam surface 56 at its inward end. Compression forces in the shock absorber are increased when the screw 52 is turned so that the screw advances into the bore. This causes the cone-shaped cam surface 56 to contact the lower facing surface of the member 48 of the spring seat 44, which lower facing surface is suitably angled and positioned to interface with and contact the cone-shaped cam surface 56.

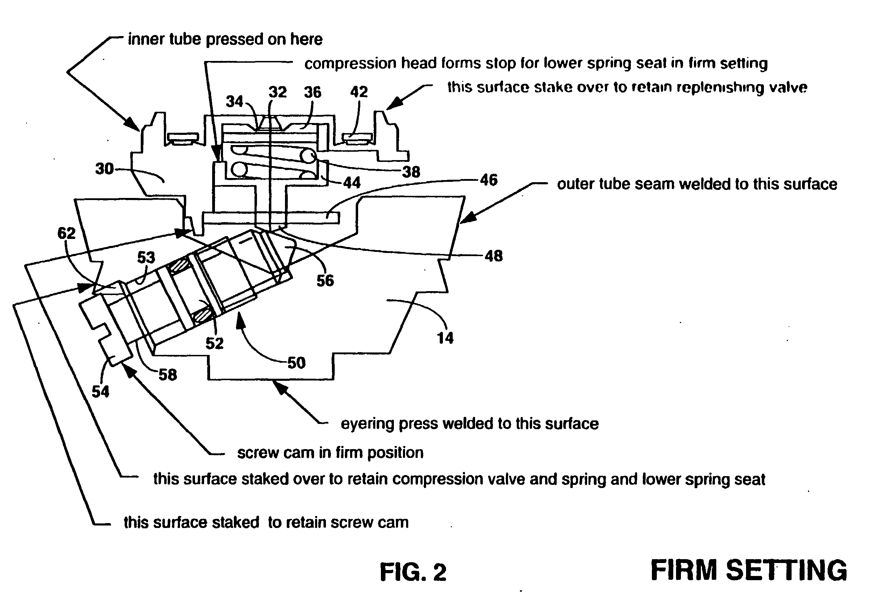

Turning now to FIGURE 2, continued rotational advancing of the screw 52 into the bore 53 in the endcap 14 causes the cam surface 56 to push against the lower facing surface of the member 48. This in turn causes the spring seat 44 to move or slide upwards within the compression head assembly 30. As a result, the compression spring preload or tension is increased which thereby increases shock compression forces. The maximum compression force (or firmest setting) occurs when the upward movement of the lower spring seat 44, due to action from the cam surface 56, is stopped by the lower spring seat 44 reaching the end of the counterbore in which it slides in the compression head assembly 30.

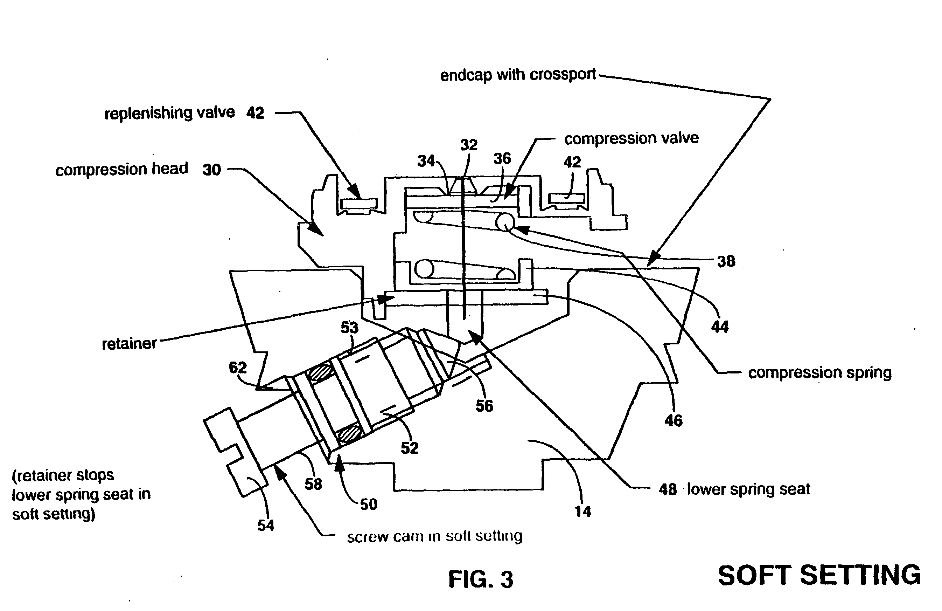

Turning now to FIGURE 3, counter rotation of the screw 52 out of the bore 53 of the endcap 14 softens the compression forces. This allows the compression spring 38 to force the spring seat 44 down along with and to follow the cam surface 56 on the end of the screw. This downward movement of the spring seat 44 in the compression head assembly 30 expands the compression spring 38 thereby reducing its preload and causing the shock compression forces to soften. Downward movement of the spring seat 44 caused by expansion of the compression spring 38 is limited by the retaining plate 46 which is staked into the lower side or end of the compression head assembly 30. The soft setting preload of the compression spring 38 occurs when the spring seat 44 bottoms on the retaining plate 46. In order to limit the outward or counter threading movement of the screw, a downward facing ridge 62 on the endcap 14 is staked. This ridge 62 contacts a shoulder adjacent the inner portion of the recess 58 in the screw 52 adjacent to the screw head 54 and prevents further outward movement of the screw with respect to the bore 53.

Because of the cone-shaped cam surface 56 and the correspondingly angled cone-shaped lower facing surface of the member 48, the compression adjusting mechanism 50 can be positioned from any radial direction about the central longitudinal axis of the shock absorber, i.e. it does not require a fixed radial orientation of the screw 52 with respect to the central longitudinal axis of the shock absorber. The design of the mechanism thus does not require the inner cylinder 16 and compression head assembly 30 to be oriented to the outer cylinder 10, the endcap 14 and the adjusting mechanism 50, resulting in a much easier and expeditious assembly of the shock absorber.

While the compression adjustment mechanism 50 has been illustrated in connection with one type of piston valving arrangement, it will be understood that the invention can be used with other piston valving arrangements. In particular, the present invention can be used with a piston valving arrangement other than as disclosed in U.S. Patent No. 5,234,084.

## Claims

1. A shock absorber comprising: an inner tubular member that defines a cylindrical chamber (16) having a central longitudinal axis; an outer tubular member (10) that is coaxial with the inner tubular member; a piston (20) that is slidably mounted within the cylindrical chamber parallel to the central longitudinal axis of the cylindrical chamber; a piston rod (26) that extends from one side of the piston outwardly from one end of the tubular members and that has a longitudinal axis which is coaxial with the axis of the cylindrical chamber; means (12) on the one end of said tubular member for closing the one end of said tubular member and for slidably sealingly engaging the piston rod (26); a hydraulic fluid filled rebound chamber (22) and a hydraulic fluid filled compression chamber (24), defined within said cylindrical chamber on the piston rod side of the piston and on the opposite side of the piston, respectively; a hydraulic fluid reservoir (18); means for permitting the flow of hydraulic fluid between the reservoir (18) and the compression chamber (24) and between compression and rebound chamber (24, 22) to accommodate the flow of hydraulic fluid resulting from piston (20) and piston rod (26) displacement within the inner tubular member (16);
a compression head subassembly (30) comprising: a replenishing valve (42) and a centrally disposed, spring biased compression valve (36), which valves are in fluid communication with the reservoir (18) and the compression chamber (24); a first counterbore having a first end, a second end, and a central longitudinal axis generally parallel to the central longitudinal axis of the cylindrical chamber, with the first end of the first counterbore being adjacent to the compression valve (36), and with the second end of the first counterbore being open to the exterior of the compression head sub-assembly (30); a movable spring seat (44) that is disposed in the first counterbore, that is adapted to be moved, in the first counterbore and parallel to the central longitudinal axis of the first counterbore, toward and away from the first end of the first counterbore, and that includes a member (48) which, in part, protrudes out of the second end of the first counterbore; a coil compression spring (38) disposed within the first counterbore, with one end of the spring being connected with the compression valve (36) and with the other end of the spring being connected with the spring seat (44);
an end cap subassembly (14) comprising: a second counterbore (53) having a first end and a second end, with the first end of the second counterbore being open to the exterior of the end cap subassembly; and a threaded screw (52) having a first end and a second end, with the screw being threadingly received within the second counterbore, with the first end of the screw having a head (54) thereon and being adjacent to the first end of the second counterbore (53), such that selective rotation of the screw (52), relative to the second counterbore (53) will move the spring seat (44) selectively toward or away from the one end of the first counterbore,
**characterised in that** the reservoir is defined by the inner tubular member (16) and the outer tubular member (10), the compression head subassembly is adapted to be brought to and assembled onto the other end of the inner tubular member (16) as a completely self-contained subassembly, and includes means for limiting the movement of the spring seat (44) toward the first end of the first counterbore, and means (46) for limiting the movement of the spring seat (44) away from the first end of the first counterbore and for preventing removal of the spring (38) and spring seat (44) from the second end of the first counterbore, the end cap subassembly is adapted to be brought to and assembled onto the other end of the outer tubular member (10) as a completely self-contained subassembly after the compression head assembly (30) has been assembled onto the other end of the inner tubular member (16), and the second end of the screw (52) has means (56) adapted to protrude out of the second end of the second counterbore for engaging the protruding member (48) of the spring seat (44), a portion of the end cap assembly (14) having a configuration substantially matching the configuration of a portion of the compression head subassembly (30) so that when the end cap subassembly is brought to and assembled onto the other end of the outer tubular member (10), said portions of the compression head and end cap subassemblies (30,14) are in substantial surface-to-surface contact, the second ends of the first and second counterbores are adjacent to each other such that the second end of the screw (52) is adapted to engage the protruding member (48) of the spring seat (44).

2. A shock absorber according to Claim 1 wherein the central longitudinal axes of the screw (52) and the second counterbore (53) are disposed at an acute angle with respect to the central longitudinal axis of the cylindrical chamber; and wherein the other end of the screw (52) is a cone-shaped cam surface (56) that is adapted to engage a corresponding surface on the protruding member (48) of the spring seat (44).

3. A shock absorber according to Claim 1 or Claim 2 wherein the radial orientation of the longitudinal central axis of the screw (52), relative to the central longitudinal axis of the cylindrical chamber, is unrestricted.

## Patentansprüche

1. Stoßdämpfer, bestehend aus einem Innenrohr, durch den ein Zylinderraum (16) mit einer Längsmittelachse gebildet wird, einem Außenrohr (10), das koaxial zu dem Innenrohr angeordnet ist; einem Kolben (20), der parallel zur Längsmittelachse des Zylinderraums gleitend in den Zylinderraum eingesetzt ist; einer Kolbenstange (26), die sich von einer Seite des Kolbens von einem Ende der Rohre nach außen erstreckt und eine koaxial zur Längsmittelachse des Zylinderraums angeordnete Längsmittelachse aufweist; einer an dem einen Ende des Behälterrohrs angeordneten Einrichtung (12) zum Verschließen des einen Endes des Behälterrohrs und zum Aufnehmen und gleichzeitigen Abdichten der Kolbenstange (26) bei der Gleitbewegung; einem mit Druckflüssigkeit gefüllten Ausfederungsraum (22) und einem mit Druckflüssigkeit gefüllten Einfederungsraum (24), die innerhalb des Zylinderraums auf der Kolbenstangenseite des Kolbens bzw. auf der gegenüberliegenden Seite des Kolbens vorhanden sind; einem Druckflüssigkeitsvorratsraum (18); einer Einrichtung zum Überströmenlassen von Druckflüssigkeit zwischen dem Vorratsraum (18) und dem Einfederungsraum (24) und zwischen dem Einfederungs- und dem Ausfederungsraum (24 bzw. 22) zur Aufnahme des durch die Bewegung des Kolbens (20) und der Kolbenstange (26) im Innenrohr (16) verursachten Druckflüssigkeitsstroms; einer Bodenventilbaugruppe (30), bestehend aus einem Ausgleichventil (42) und einem mittig angeordneten, federbelasteten Einfederungsventil (36), über die die Flüssigkeit zwischen dem Vorratsraum (18) und dem Einfederungsraum (24) überströmen kann; einer ersten zylindrischen Senkbohrung mit einer ersten, einer zweiten Stimseite und einer Längsmittelachse, die im Wesentlichen parallel zur Längsmittelachse des Zylinderraums angeordnet ist, wobei die erste Stimseite der ersten zylindrischen Senkbohrung unmittelbar am Einfederungsventil (36) angeordnet ist und die zweite Stirnseite der ersten Senkbohrung von der Bodenventilbaugruppe (30) her nach außen offen ist; einem in die erste Senkbohrung eingesetzten verschiebbaren Federteller (44), der dazu vorgesehen ist, dass er sich in der ersten Senkbohrung und parallel zur Längsmittelachse der ersten Senkbohrung in Richtung der ersten Stirnseite der ersten Senkbohrung und von dieser weg bewegt, und zu dem ein Element (48) gehört, das teilweise an der zweiten Stimseite der ersten Senkbohrung hervorsteht; einer als Druckfeder dienenden und in die erste Senkbohrung eingesetzten Schraubenfeder (38), wobei ein Ende der Feder mit dem Einfederungsventil (36) und das andere Ende der Feder mit dem Federteller (44) verbunden ist; einer Endkappenbaugruppe (14), die mit einer zweiten zylindrischen Senkbohrung (53) mit einer ersten und einer zweiten Stirnseite ausgebildet ist, wobei die erste Stimseite der zweiten Senkbohrung nach der Außenseite der Endkappenbaugruppe offen ist; und einer Schraube (52) mit einem ersten und einem zweiten Ende, wobei die Schraube in die zweite Senkbohrung eingeschraubt ist und das erste Ende der Schraube mit einem Schraubenkopf (54) versehen und in der Nähe der ersten Stimseite der zweiten Senkbohrung (53) so angeordnet ist, dass durch eine wahlweise Verstellung der Schraube (52) durch Hinein- oder Herausschrauben in die zweite Senkbohrung (53) bzw. aus ihr heraus der Federteller (44) wahlweise in Richtung der besagten Stirnseite der ersten Senkbohrung oder von dieser weg bewegt wird,
**dadurch gekennzeichnet, dass** der Vorratsraum durch das Innenrahr (16) und das Außenrohr (10) begrenzt ist, die Bodenventilbaugruppe so ausgelegt ist, dass sie als vollkommen selbständige Baugruppe am anderen Ende des Innenrohrs (16) aufgesetzt und daran befestigt werden kann und zu den Bestandteilen der Baugruppe eine Einrichtung zur Begrenzung der Bewegung des Federfalters (44) in Richtung der ersten Stirnseite der ersten Senkbohrung und eine Einrichtung (46) zur Begrenzung der Bewegung des Federtellers (44) weg von der ersten Stirnseite der ersten Senkbohrung und zur Verhinderung des Sichlösens der Feder (38) und des Federtellers (44) von der zweiten Stimseite der ersten Senkbohrung gehören, die Endkappenbaugruppe so ausgelegt ist, dass sie als vollkommen selbständige Baugruppe am anderen Ende des Außenrohrs (16) aufgesetzt und daran befestigt werden kann, nachdem die Bodenventilbaugruppe (30) am anderen Ende des Innenrohrs (16) befestigt wurde, und das zweite Ende der Schraube (52) mit einem Element (56) versehen ist, das an der zweiten Stirnseite der zweiten Senkbohrung hervorsteht, so dass es an dem hervorstehenden Teil (48) des Federtellers (44) anliegt, ein Abschnitt der Endkappenbaugruppe (14) so geformt ist, dass er der Form eines Abschnitts der Bodenventilbaugruppe (30) entspricht, so dass die Abschnitte der Bodenventil- und der Endkappenbaugruppe (30 bzw. 14) im Wesentlichen aneinander anliegen, wenn die Endkappenbaugruppe am anderen Ende des Außenrohrs (10) aufgesetzt und daran befestigt wurde, und die zweiten Stirnseiten der ersten und zweiten Senkbohrung aneinander angrenzen, so dass das zweite Ende der Schraube (52) am hervorstehenden Teil (48) des Federtellers (44) anliegen kann.

2. Stoßdämpfer nach Anspruch 1, bei dem die Längsmittelachsen der Schraube (52) und der zweiten Senkbohrung (53) in einem spitzen Winkel zur Längsmittelachse des Zylinderraums verlaufen und bei dem das andere Ende der Schraube (52) mit einer kegelförmigen Ansatzoberseite (56) ausgebildet ist, mit der sie an der entsprechenden Oberfläche des hervorstehenden Teils (48) des Federtellers (44) anliegt.

3. Stoßdämpfer nach Anspruch 1 oder 2, bei dem es hinsichtlich der radialen Ausrichtung der Längsmittelachse der Schraube (52) zur Längsmittelachse des Zylinderraums keinerlei Begrenzung gibt.

## Revendications

1. Amortisseur comprenant : un élément tubulaire interne qui délimite une chambre cylindrique (16) ayant un axe longitudinal central ; un élément tubulaire externe (10) qui est coaxial avec l'élément tubulaire interne ; un piston (20) qui est monté de manière coulissante à l'intérieur de la chambre cylindrique parallèle à l'axe longitudinal central de la chambre cylindrique ; une tige de piston (26) qui s'étend à partir d'un côté du piston vers l'extérieur au-delà d'une extrémité des éléments tubulaires et qui a un axe longitudinal qui est coaxial avec l'axe de la chambre cylindrique ; des moyens (12) sur l'extrémité dudit élément tubulaire pour fermer ladite extrémité dudit élément tubulaire et pour coopérer de manière coulissante et hermétique avec la tige de piston (26) ; une chambre de rebond remplie de fluide hydraulique (22) et une chambre de compression remplie de fluide hydraulique (24), définies à l'intérieur de ladite chambre cylindrique, la première du côté de la tige du piston et la deuxième de l'autre côté du piston ; un réservoir de fluide hydraulique (18) ; des moyens permettant l'écoulement du fluide hydraulique entre le réservoir (18) et la chambre de compression (24) et entre les chambres de compression et de rebond (24, 22) afin d'adapter l'écoulement de fluide hydraulique résultant du déplacement du piston (20) et de la tige de piston (26) à l'intérieur de l'élément tubulaire interne (16) ;
un sous-ensemble de tête de compression (30) comprenant : une soupape de remplissage (42) et une soupape de compression (36) décalée par ressort, disposée de manière centrale, lesquelles soupapes sont en communication fluidique avec le réservoir (18) et la chambre de compression (24) ; un premier trou ayant une première extrémité, une deuxième extrémité et un axe longitudinal central globalement parallèle à l'axe longitudinal central de la chambre cylindrique, la première extrémité du premier trou étant adjacente à la soupape de compression (36), et la deuxième extrémité du premier trou débouchant à l'extérieur du sous-ensemble de tête de compression (30) ; un siège de ressort mobile (44) qui est disposé dans le premier trou, qui est apte à être déplacé, dans le premier trou et parallèlement à l'axe longitudinal central du premier trou, vers et à distance de la première extrémité du premier trou, et qui inclut un élément (48) qui, en partie, dépasse de la deuxième extrémité du premier trou ; un ressort hélicoïdal de compression (38) disposé à l'intérieur du premier trou, une extrémité du ressort étant liée à la soupape de compression (36) et l'autre extrémité du ressort étant liée au siège de ressort (44) ;
un sous-ensemble de bouchon d'extrémité (14) comprenant : un deuxième trou (53) ayant une première extrémité et une deuxième extrémité, la première extrémité du deuxième trou débouchant à l'extérieur du sous-ensemble de bouchon d'extrémité ; et une vis filetée (52) ayant une première extrémité et une deuxième extrémité, la vis étant logée par vissage à l'intérieur du deuxième trou, la première extrémité de la vis ayant une tête (54) et étant adjacente à la première extrémité du deuxième trou (53). de telle manière que la rotation sélective de la vis (52), par rapport au deuxième trou (53), déplacera de manière sélective le siège de ressort (44) vers ou à distance de ladite une extrémité du premier trou,
**caractérisé en ce que** le réservoir est délimité par l'élément tubulaire interne (16) et l'élément tubulaire externe (10), le sous-ensemble de tête de compression est apte à être amené et assemblé sur l'autre extrémité de l'élément tubulaire interne (16) en tant que sous-ensemble entièrement autonome, et inclut des moyens pour limiter le mouvement du siège de ressort (44) vers la première extrémité du premier trou, et des moyens (46) pour limiter le mouvement du siège de ressort (44) à l'écart de la première extrémité du premier trou et pour empêcher le retrait du ressort (38) et du siège de ressort (44) de la deuxième extrémité du premier trou, le sous-ensemble de bouchon d'extrémité est prévu pour être amené et assemblé sur l'autre extrémité de l'élément tubulaire externe (10) en tant que sous-ensemble entièrement autonome une fois que l'ensemble de tête de compression (30) a été assemblé sur l'autre extrémité de l'élément tubulaire interne (16), et la deuxième extrémité de la vis (52) présente des moyens (56) prévus pour dépasser de la deuxième extrémité du deuxième trou pour agir sur l'élément saillant (48) du siège de ressort (44), une partie de l'ensemble de bouchon d'extrémité (14) ayant une configuration s'adaptant sensiblement à la configuration d'une partie du sous-ensemble de tête de compression (30) de sorte que, lorsque le sous-ensemble de bouchon d'extrémité est amené et assemblé sur l'autre extrémité de l'élément tubulaire externe (10), lesdites parties des sous-ensembles de tête de compression et de bouchon d'extrémité (30, 14) sont sensiblement en contact surface-surface, les deuxièmes extrémités des premier et deuxième trous sont adjacentes l'une à l'autre de sorte que la deuxième extrémité de la vis (52) est apte à agir sur l'élément saillant (48) du siège de ressort (44).

2. Amortisseur selon la revendication 1, dans lequel l'axe longitudinal central de la vis (52) et le deuxième trou (53) sont disposés selon un angle aigu par rapport à l'axe longitudinal central de la chambre cylindrique ; et dans lequel l'autre extrémité de la vis (52) est une surface conique de came (56) qui est prévue pour agir sur une surface correspondante sur l'élément saillant (48) du siège de ressort (44).

3. Amortisseur selon la revendication 1 ou la revendication 2, dans lequel l'orientation radiale de l'axe central longitudinal de la vis (52), par rapport à l'axe longitudinal central de la chambre cylindrique, est libre.
